# EUROPEAN PATENT SPECIFICATION

(11) **EP 1 214 650 B1**
(45) Date of publication and mention of the grant of the patent: **16.04.2003**
(21) Application number: 00954746.4
(22) Date of filing: 18.08.2000
(51) Int. Cl.: G06F 9/46

(54) **THREAD LOCKING**
VERRIEGELUNG VON THREADS
VERROUILLAGE D'UNITE D'EXECUTION

(30) Priority: 14.09.1999 GB 9921719
(43) Date of publication of application: 19.06.2002
(73) Proprietor: TAO GROUP LIMITED, Earley, Reading RG6 1AZ (GB)
(72) Inventor: HAYWARD, Andrew, Streatley, Berkshire RG8 9QH (GB)
(74) Representative: Maggs, Michael Norman
(86) International application number: GB0003236
(87) International publication number: WO01020451

(56) References cited:
- EP-A- 0 783 150
- US-A- 5 946 711
- "SHARING MEMORY RECORDS BETWEEN MULTIPLE CONTAINER CONTROLS" IBM TECHNICAL DISCLOSURE BULLETIN,US,IBM CORP. NEW YORK, vol. 36, no. 8, 1 August 1993 (1993-08-01), pages 347-349, XP000390249 ISSN: 0018-8689

## Description

The present invention relates to thread locking in a multi-threaded environment, and in particular to multi-threaded object-oriented systems.

Programming languages which are object-oriented and which have a multi-threading capability are well-known. One example of such a language is Java (trademark of Sun Microsystems Inc.). In a multi-threaded environment, threads share the same code and memory. This can cause a synchronization problem, and care has to be taken to ensure that two threads are not trying to make changes to the same memory location. In order to deal with this problem, Java (and indeed most other object-oriented languages) requires that each object has a lock associated with it. When a thread which can cause a synchronisation problem is to invoke a method of an object, the state of that object's lock is tested. If it is locked, the thread waits until the lock becomes unlocked. If the object is unlocked, the lock is locked, the method is invoked, and when the method is completed the lock is unlocked.

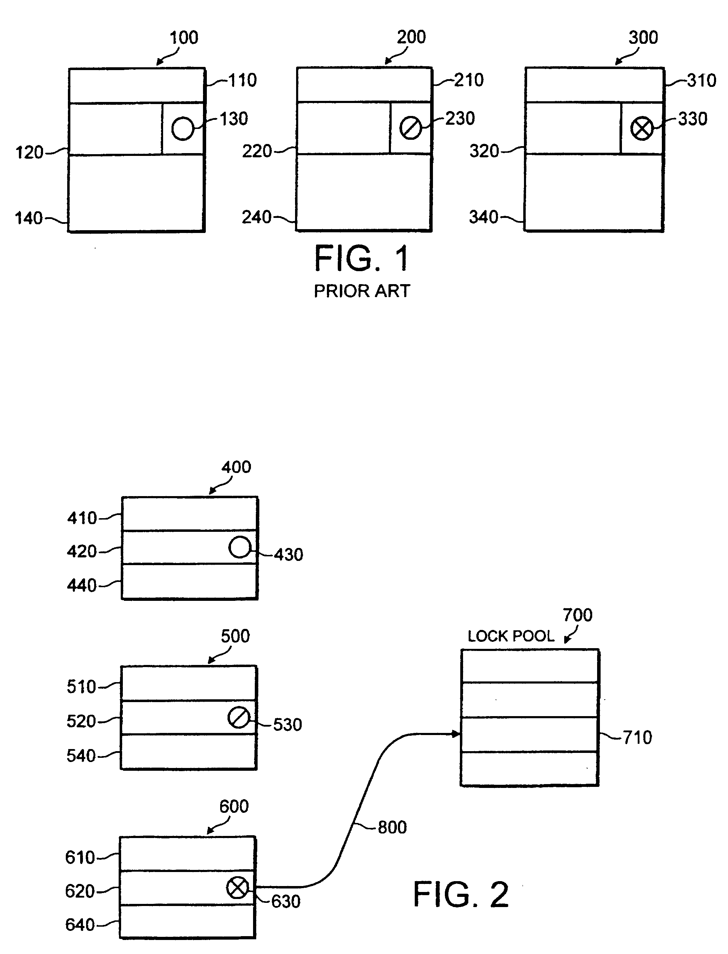

A typical prior art Java implementation is shown schematically in Figure 1. Each individual object 100, 200, 300 has a respective header 110, 210, 310 and a respective lock block 120, 220, 320. The rest of the object (executable code, data and so on) is shown schematically by the respective blocks 140, 240, 340. Although the lock blocks are shown immediately following the header, they could in fact be located anywhere within the object.

Each lock block 120, 220, 320 reserves space within the object which is used to store locking information about that object, for example the lock status, who has the lock, how many times the lock has been applied, and so on. Part of that block is reserved for lock status information which is shown symbolically in the Figure. The object 100 is never locked, as indicated by the symbol 130, the object 200 is unlocked, as indicated by the symbol 230, and the object 300 is locked, as indicated by the symbol 330.

With such an arrangement, each object needs to reserve a substantial amount of memory space (for example 64 bytes), whether the lock is actually in use or not. When a large number of objects are being held in memory at any one time, the aggregate amount of memory that needs to be reserved for locks can be large. This poses a problem particularly where the object-oriented program is being used in an embedded environment, such as within a mobile telephone, where memory space may be severely limited. Not only is the amount of memory which has to be reserved for the locks large, that amount is fixed and effectively amounts to an "overhead", whether or not it is actually used.

EP-A-0 783 150 discloses a method and a system for managing object locks in a multi-threading, object-based processing system. Locking information for a locked object is stored at a memory location and a pointer associated with the locked object is maintained, said pointer pointing to said memory location.

According to the present invention there is provided a method of object locking in a multi-threading, object-based processing system as set out in claim 1.

By storing the locking information separately from the locked object, memory utilisation can be improved. Less space needs to be maintained for locking information within the object itself; instead, space needs to be provided merely for a single pointer. Typically, although not necessarily, the memory space that is associated with the object will be a single word which is stored as part of the object itself.

Preferably, the object may be unlocked by resetting the pointer (for example by changing its value to zero) and releasing the memory location for other uses. In one embodiment, a certain section of memory may be reserved exclusively for locking information; alternatively, in another embodiment, any memory that is released may be made available for the storage of other data that may be required by the executing application.

Preferably, each memory location comprises a contiguous memory block, with the individual blocks making up a contiguous lock pool.

The invention further extends to a computer program for effecting a method as previously described, to a data carrier carrying such a computer program, and to a data stream which is representative of such a computer program.

According to another aspect of the invention there is provided a multi-threading, object-based computer system as set out in claim 13.

The invention may be carried into practice in various ways and one specific embodiment will now be described, by way of example, with reference to the accompanying Figures in which:
Figure 1 is a schematic diagram showing a typical prior art locking implementation; and
Figure 2 is a locking implementation according to the preferred embodiment of the present invention.

In the preferred embodiment, shown in Figure 2, each individual object 400, 500, 600 has a respective header 410, 510, 610. Between the header and the rest of the object 440, 540, 640 a single word 420, 520, 620 is reserved for locking information. When the object is never to be locked, as indicated at 430, the word is set to a specific predefined value. When the object is unlocked, as indicated at 530, the word is set to a different predefined value. These values might be 1 and 0, respectively, although the exact numbers do not matter: all that is required is for the thread reading the word 420 to realise that the object 400 is never locked, and for a thread reading the word 520 to realise that the object 500 is unlocked.

When an object is required to be locked, the lock word is changed from its original value 530 to a new value 630 which represents a pointer to a specific memory location 710 within a separate lock pool 700. This is indicated by the arrow 800. The memory block 710 contains the locking information for the block 600, for example information on who has the lock, how many times the lock has been used and so on. In the preferred implementation, there need be no specific coded indication either within the word 620 or within the memory block 710 to show that the lock is on: the fact that the lock is on is implied merely by virtue of the fact that the word 620 contains a pointer rather than the fixed predefined unlocked/never-locked values 530, 430.

The lock pool 700 is preferably dynamic, with additional memory blocks 710 being reserved only as and when required, or in other words when a lock is to be set on. While the lock pool preferably consists of a series of contiguous memory blocks, that is not essential and non-contiguous memory areas could be used if desired.

In operation, when a new object is created the lock word is initially set to the never-locked value 430 or the unlocked value 530 depending upon the object. When a thread wishes to use the object, it tests whether the object is already locked. Assuming it is unlocked, it reserves a memory location 710 within the lock pool for the necessary locking information, and changes the lock word to a pointer 630 to that location. Once the invoked method has been completed, the lock word is changed back to its unlocked value 530, and the memory block 710 is released. That block 710 then becomes available for reuse by another lock. Alternatively or additionally, in one embodiment, the memory block 710 is not reserved purely for locking information, and may be made available for the storage of any other data that the executing application may require.

It will be appreciated of course that the amount of memory that needs to be reserved within each object is extremely small when compared with the amount required by the prior art implementation. In the preferred embodiment, only a single word (8 bytes) is reserved within each object, compared with typically 64 bytes per object in the prior art. The amount of memory required per object can in the present invention be made as small as possible, consistent with the need to store a pointer addressed to a location within the lock pool.

## Claims

1. A method of managing object locks in a multi-threading, object-based processing system, each lockable object within the system including a pointer location (420,520,620) which, when the object is locked, contains a pointer (630) which points to a memory location (710) storing locking information for the object; **characterised by** the step of unlocking the object by replacing the pointer with a non-pointer value (530).

2. A method as claimed in claim 1 in which, when the object is unlocked, the memory location (710) is made available for storing locking information relating to other objects.

3. A method as claimed in claim 1 in which, when the object is unlocked, the memory location (710) is made available for the storage of other data.

4. A method as claimed in claim 1 in which the non-pointer value is zero.

5. A method as claimed in any one of the preceding claims including the step of replacing the pointer with a second non-pointer value (430) if the object is never to be locked.

6. A method as claimed in any one of the preceding claims including maintaining a plurality of locked objects and associated memory locations (710), the memory locations defining a common lock-pool (700).

7. A method as claimed in claim 6 in which the memory locations (710) of the lock pool (700) are contiguous.

8. A method as claimed in claim 6 or claim 7 when dependent upon claim 2, including the step of reserving the lock pool (700) exclusively for locking information and then, when an object is to be locked, reserving within the lock pool the said memory location (710).

9. A method as claimed in claim 1 in which the memory location (710) comprises a contiguous memory block.

10. A computer program for effecting a method as claimed in any one of claims 1 to 9.

11. A data carrier carrying a computer program as claimed in claim 10.

12. A data stream representative of a computer program as claimed in claim 10.

13. A multi-threading, object-based computer system, having a plurality of lockable objects, each locable object including a pointer location (420,520,620) which, when the object is locked, contains a pointer (630) which points to a memory location (710) storing locking information for the object; **characterised in that** each object, when unlocked, contains a non-pointer value (530) within the pointer location (520).

14. A computer system as claimed in claim 13 in which, when the object is unlocked, the memory location (710) is made available for storing locking information relating to other objects.

15. A computer system as claimed in claim 13 in which, when the object is unlocked, the memory location (710) is made available for the storage of other data.

16. A computer system as claimed in any one of claims 13 to 15 including means for testing the contents of the pointer location (420,520,620) and for determining that the object is locked if the location contains a pointer (630) and unlocked if it contains a non-pointer value (430,530).

## Patentansprüche

1. Verfahren zum Managen von Objektverriegelungen in einem objekt-basierenden Multisthread-Verarbeitungssystem, wobei jedes verriegelbare Objekt in dem System einen Zeigerort (420, 520, 620) aufweist, der, wenn das Objekt verriegelt ist, einen Zeiger (630) enthält, der auf einen Speicherplatz (710) hinweist, der Verriegelungsinformation für das Objekt speichert, **gekennzeichnet durch** den Schritt des Entriegelst des Objekts, indem der Zeiger **durch** einen Nicht-Zeiger-Wert (530) ersetzt wird.

2. Verfahren nach Anspruch 1, bei dem, wenn das Objekt verriegelt ist, der Speicherplatz (710) verfügbar gemacht wird, um eine Verriegelungsinformation zu speichern, die mit anderen Objekten in Beziehung steht.

3. Verfahren nach Anspruch 1, bei dem, wenn das Objekt entriegelt ist, der Speicherplatz (710) für die Speicherung von anderen Daten verfügbar gemacht wird.

4. Verfahren nach Anspruch 1, bei dem der Nicht-Zeiger-Wert Null ist.

5. Verfahren nach einem der vorhergehenden Ansprüche umfassend den Schritt des Ersetzend des Zeigers mit einem Nicht-Zeiger-Wert (430), wenn das Objekt nie verriegelt werden soll.

6. Verfahren nach einem der vorhergehenden Ansprüche umfassend Aufrechterhalten einer Vielzahl von verriegelten Objekten und zugehörigen Speicherplätzen (710), wobei die Speicherplätze einen gemeinsamen Verriegelungspool (700) definieren.

7. Verfahren nach Anspruch 6, bei dem die Speicherplätze (710) des Verriegelungspools (700) abhängig sind.

8. Verfahren nach Anspruch 6 oder Anspruch 7, wenn diese von Anspruch 2 abhängen, umfassend den Schritt des Reservierens des Verriegelungspools (700) ausschließlich für die Verriegelungsinformation und dann, wenn ein Objekt verriegelt werden soll, Reservieren des Speicherplatzes (710) in dem Verriegelungspool.

9. Verfahren nach Anspruch 1, bei dem der Speicherplatz (710) einen abhängigen Speicherblock umfasst.

10. Computerprogramm zur Ausführung eines Verfahrens, wie es in einem der Ansprüche 1 bis 9 beansprucht wird.

11. Datenträger, der ein Computerprogramm trägt, wie es in Anspruch 10 beansprucht ist.

12. Datenstrom, der ein Computerprogramm representiert, wie es in Anspruch 10 beansprucht ist.

13. Objekt-basierendes Multisthread-Computersystem mit einer Vielzahl von verriegelbaren Objekten, wobei jedes verriegelbare Objekt einen Zeigerplatz (420, 520, 620) aufweist, der, wenn das Objekt verriegelt ist, einen Zeiger (630) enthält, der auf einen Speicherplatz (710) hinweist, der eine Verriegelungsinframmation für das Objekt speichert, **dadurch gekennzeichnet, dass** jedes Objekt, wenn es entriegelt ist, einen Nicht-Zeiger-Wert (530) in dem Zeigerplatz (520) enthält.

14. Computersystem nach Anspruch 13, in dem, wenn das Objekt entriegelt ist, der Speicherplatz (710) zum Speichern von Verriegelungsinformation verfügbar gemacht wird, die zu anderen Objekten in Beziehung steht.

15. Computersystem nach Anspruch 13, in dem, wenn das Objekt entriegelt ist, der Speicherplatz (710) für das Speichern von anderen Daten verfügbar gemacht wird.

16. Computersystem nach einem der Ansprüche 13 bis 15 umfassend eine Einrichtung zum Testen des Inhalts des Zeigerplatzes (420, 520, 620) und zum Bestimmen, dass das Objekt verriegelt ist, wenn der Platz einen Zeiger (630) enthält, und dass es entriegelt ist, wenn er einen Nicht-Zeiger-Wert (430, 530) enthält.

## Revendications

1. Procédé de gestion de verrous d'objet dans un système de traitement multiprocessus basé sur des objets, chaque objet verrouillable dans le système comprenant un emplacement de pointeur (420, 520, 620) qui, lorsque l'objet est verrouillé, contient un pointeur (630) qui pointe vers un emplacement mémoriel (710) mémorisant des informations de verrouillage pour l'objet, **caractérisé par** l'étape visant à déverrouiller l'objet en remplaçant le pointeur par une valeur de non-pointeur (530).

2. Procédé suivant la revendication 1, dans lequel, lorsque l'objet est déverrouillé, l'emplacement mémoriel (710) est rendu disponible pour mémoriser des informations de verrouillage concernant d'autres objets.

3. Procédé suivant la revendication 1, dans lequel, lorsque l'objet est déverrouillé, l'emplacement mémoriel (710) est rendu disponible pour la mémorisation d'autres données.

4. Procédé suivant la revendication 1, dans lequel la valeur de non-pointeur est zéro.

5. Procédé suivant l'une quelconque des revendications précédentes, comprenant l'étape visant à remplacer le pointeur par une deuxième valeur de non-pointeur (430) si l'objet ne doit jamais être verrouillé.

6. Procédé suivant l'une quelconque des revendications précédentes, comprenant le maintien d'une pluralité d'objets verrouillés et d'emplacements mémoriels (710) associés, les emplacements mémoriels définissant un groupe de verrous (700) commun.

7. Procédé suivant la revendication 6, dans lequel les emplacements mémoriels (710) du groupe de verrous (700) sont contigus.

8. Procédé suivant la revendication 6 ou 7, lorsque dépendante de la revendication 2, comprenant l'étape visant à réserver le groupe de verrous (700) exclusivement pour des informations de verrouillage puis, lorsqu'un objet doit être verrouillé, à réserver dans le groupe de verrous ledit emplacement mémoriel (710).

9. Procédé suivant la revendication 1, dans lequel l'emplacement mémoriel (710) comprend un bloc mémoire contigu.

10. Programme informatique pour exécuter un procédé suivant l'une quelconque des revendications 1 à 9.

11. Support de données supportant un programme informatique suivant la revendication 10.

12. Flux de données représentatif d'un programme informatique suivant la revendication 10.

13. Système informatique multiprocessus basé sur des objets, comprenant une pluralité d'objets verrouillables, chaque objet verrouillable comprenant un emplacement de pointeur (420, 520, 620) qui, lorsque l'objet est verrouillé, contient un pointeur (630) qui pointe vers un emplacement mémoriel (710) mémorisant des informations de verrouillage pour l'objet, **caractérisé en ce que** chaque objet, lorsqu'il est déverrouillé, contient une valeur de non-pointeur (530) dans l'emplacement de pointeur (520).

14. Système informatique suivant la revendication 13, dans lequel, lorsque l'objet est déverrouillé, l'emplacement mémoriel (710) est rendu disponible pour mémoriser des informations de verrouillage concernant d'autres objets.

15. Système informatique suivant la revendication 13, dans lequel, lorsque l'objet est déverrouillé, l'emplacement mémoriel (710) est rendu disponible pour la mémorisation d'autres données.

16. Système informatique suivant l'une quelconque des revendications 13 à 15, comprenant des moyens pour tester le contenu de l'emplacement de pointeur (420, 520, 620) et pour déterminer que l'objet est verrouillé si l'emplacement contient un pointeur (630) et déverrouillé s'il contient une valeur de non-pointeur (430, 530).
